# EUROPEAN PATENT APPLICATION

(11) **EP 2 768 066 A1**
(43) Date of publication of application: **20.08.2014**
(21) Application number: 13852345.1
(22) Date of filing: 29.03.2013
(51) Int. Cl.: H01M 10/0567, H01M 10/058, H01M 10/0525

(54) **NONAQUEOUS ORGANIC ELECTROLYTE ADDITIVE AND PREPARATION METHOD THEREOF, NONAQUEOUS ORGANIC ELECTROLYTE, AND LITHIUM ION SECONDARY BATTERY**

(30) Priority: 26.11.2012 CN 201210486911
(71) Applicant: Huawei Technologies Co., Ltd., Shenzhen, Guangdong 518129 (CN)
(72) Inventor: AN, Weifeng, Shenzhen, Guandong 518-129 (CN)
(74) Representative: Körber, Martin Hans
(86) International application number: PCT/CN2013/073485
(87) International publication number: WO 2014/079183

(57) **Abstract**

An embodiment of the present invention provides a non-aqueous organic electrolyte additive, a chemical structural formula of which is as shown by Formula (I), where R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group. The non-aqueous organic electrolyte additive is oxidized and decomposed before an organic solvent in a high-voltage lithium-ion secondary battery, thereby forming a protection film that facilitates conduction of Li⁺ on a surface of an anode active material, increasing cyclic performance of a lithium-ion secondary battery at a high voltage, and achieving good stability. Embodiments of the present invention further provide a method for preparing a non-aqueous organic electrolyte additive, a non-aqueous organic electrolyte containing the non-aqueous organic electrolyte additive, and a lithium-ion secondary battery having a high energy density.

## Description

This application claims priority to Chinese Patent Application No. 201210486911.0, filed with the Chinese Patent Office on November 26, 2012 and entitled "NON-AQUEOUS ORGANIC ELECTROLYTE ADDITIVE, METHOD FOR PREPARING NON-AQUEOUS ORGANIC ELECTROLYTE ADDITIVE, NON-AQUEOUS ORGANIC ELECTROLYTE, AND LITHIUM-ION SECONDARY BATTERY", which is incorporated herein by reference in its entirety.

### TECHNICAL FIELD

The present invention relates to the field of lithium-ion secondary batteries, and in particular, to a non-aqueous organic electrolyte additive, a method for preparing the non-aqueous organic electrolyte additive, a non-aqueous organic electrolyte, and a lithium-ion secondary battery.

### BACKGROUND

With the expansion of an application field of lithium-ion secondary batteries and the introduction of new application scenarios such as large-scale storage power stations and high-temperature base station backup power in recent years, people have more urgent demands for high-energy lithium-ion secondary batteries.

To achieve high energy for a lithium-ion secondary battery, generally a work voltage of a lithium-ion secondary battery is increased or a high-energy anode material is researched and developed. Reported high-voltage anode materials include LiCoPO₄, LiNiPO₄, Li₃V₂PO₄, LiNi_{0.5}Mn_{1.5}O₄, and the like, a charging voltage platform of which approaches or is higher than 5V; however, their matching non-aqueous organic electrolytes are currently reported. At present, a common electrolyte for a lithium-ion secondary battery is mainly 1M LiPF₆ dissolved in a carbonate-based solvent. However, in a fully-charged high-voltage (a voltage above 4.5V) battery system, a side reaction occurs very easily between 1M LiPF₆ and an anode active material, thereby resulting in oxidation and decomposition, which causes cyclic performance of the lithium-ion secondary battery to decline, a volume to increase, and discharge capacity to reduce. Therefore, this electrolyte cannot be applied to a high-voltage lithium-ion secondary battery system.

In 2003, Shoichi Tsujioka and others synthesized lithium oxalyldifluoroborate (LiODFB), which is used a film-forming additive and added in a non-aqueous organic electrolyte of a lithium-ion secondary battery. When a voltage of the lithium-ion secondary battery reaches about 4.5V, LiODFB is formed into a passivation film at a surface of an anode active material, thereby inhibiting a side reaction that occurs between the anode active material and the non-aqueous organic electrolyte at a high voltage. However, the passivation film is compact and impairs movement of Li⁺ and increases resistance to mitigation of Li⁺ in a process of charging and discharging, and it is presented macroscopically that internal resistance of the lithium-ion secondary battery increases, which causes capacity of the battery to reduce in the process of charging and discharging and further causes a capacity retention ratio to decrease in a cyclic process of the battery. Meanwhile, a process of preparing LiODFB is complicated and has strict environment requirements, which severely limits application of LiODFB to a lithium-ion secondary battery. Moreover, when LiODFB is applied to a lithium-ion secondary battery, acidity of the lithium-ion secondary battery is increased. Especially, in a LiMn₂O₄ material, dissolution of an element Mn causes a high temperature and a rapid decrease in cyclic performance of the lithium-ion secondary battery.

In recent years, some researchers proposed adding high voltage solvents, such as sulfones, nitriles, ion liquids whose antioxidation potentials reach above 5V, in a non-aqueous organic electrolyte, so as to increase antioxidation of the non-aqueous organic electrolyte and further enable the lithium-ion secondary battery to be used at a voltage above 4.5V. However, these high voltage solvents usually cause electrical conductivity of a non-aqueous organic electrolyte to decrease due to high viscosity. Meanwhile, these high voltage solvents have poor wettability, which causes discharge capacity of the lithium-ion secondary battery to reduce.

### SUMMARY

To solve the foregoing problems, in a first aspect, an embodiment of the present invention aims at providing a non-aqueous organic electrolyte additive, where the non-aqueous organic electrolyte additive is oxidized and decomposed before an organic solvent in a high-voltage lithium-ion secondary battery, so as to form, on a surface of an anode active material, a protection film that facilitates conduction of Li⁺, and the non-aqueous organic electrolyte additive also has high stability in an environment of a high-voltage lithium-ion secondary battery. In a second aspect, an embodiment of the present invention aims at providing a method for preparing the foregoing non-aqueous organic electrolyte additive. In a third aspect, an embodiment of the present invention aims at providing a non-aqueous organic electrolyte containing the non-aqueous organic electrolyte additive, where the non-aqueous organic electrolyte can be used in a high-voltage lithium-ion secondary battery of 4.5V and above. In a fourth aspect, an embodiment of the present invention aims at providing a lithium-ion secondary battery containing the foregoing non-aqueous organic electrolyte, where the lithium-ion secondary battery has a high energy density.

In a first aspect, an embodiment of the present invention provides a non-aqueous organic electrolyte additive, where a chemical structural formula of the non-aqueous organic electrolyte additive is as shown by Formula (I): 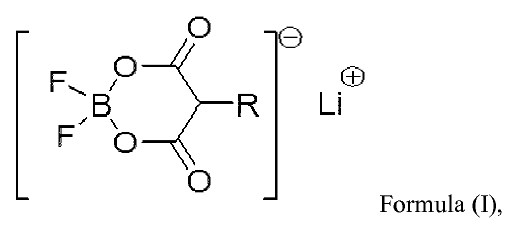 where R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

Preferably, R is H, F, CH₃, CH₂F, CH₂CH₃ or OCH₂CH₃.

The non-aqueous organic electrolyte additive provided in the first aspect of the embodiment of the present invention may be used for preparation of a lithium-ion secondary battery. In a charging process of a lithium-ion secondary battery, a potential difference between an anode and a cathode keeps increasing. When the potential difference reaches 4.5V and above 4.5V, the non-aqueous organic electrolyte additive is oxidized and decomposed before an organic solvent, and its six-membered ring is opened, so that a protection film is formed on a surface of an anode active material, which covers active sites on the surface of the anode active material, blocks direct contact between the active sites on the surface of the anode active material and a non-aqueous organic electrolyte, and reduces an oxidation effect of the anode active material on the non-aqueous organic electrolyte, thereby increasing cyclic performance of the lithium-ion secondary battery at a high voltage and avoiding situations that a volume of the lithium-ion secondary battery increases and discharge capacity is reduced. In addition, thickness of the protection film formed by the non-aqueous organic electrolyte additive provided in the first aspect of the present invention is between 20nm and 30nm, and under a precondition of not affecting internal resistance of the lithium-ion secondary battery, conduction of Li⁺ is also facilitated, and the non-aqueous organic electrolyte additive has high stability in an environment of a high-voltage lithium-ion secondary battery.

In a second aspect, an embodiment of the present invention provides a method for preparing a non-aqueous organic electrolyte additive, where the method includes the following steps:
mixing dilithium R-malonate having a chemical structural formula as shown by Formula (II) and a boron trifluoride ether complex BF₃O(CH₂CH₃)₂ by a mole ratio of 1:1, keeping a constant temperature at 50 - 150°C inside a sealed reactor for 20 - 24h, waiting till a reaction ends and cooling to a room temperature, filtering out unreacted dilithium R-malonate and a lithium fluoride solid generated after the reaction, concentrating filtrate at reduced pressure, cooling for crystallization, and using dimethyl carbonate for recrystallization, so as to obtain a non-aqueous organic electrolyte additive having a chemical structural formula as shown by Formula (I), 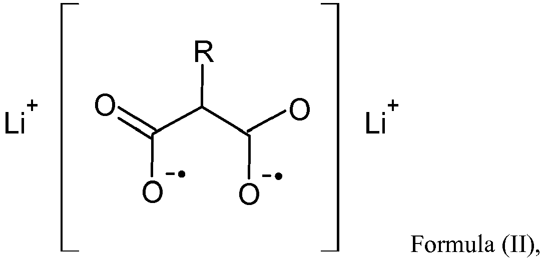 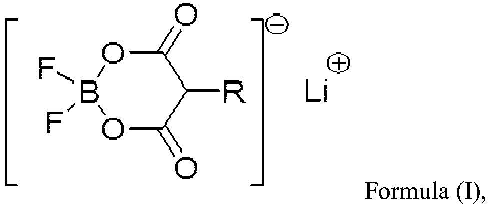 where in Formula (I) and Formula (II), R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

Preferably, R is H, F, CH₃, CH₂F, CH₂CH₃ or OCH₂CH₃.

Dilithium R-malonate and boron trifluoride ether complex BF₃O(CH₂CH₃)₂ react at the constant temperature. The reaction generates a target resultant, ether and a white precipitate lithium fluoride (LiF). A reaction process is as follows by taking an example that an R group is H.

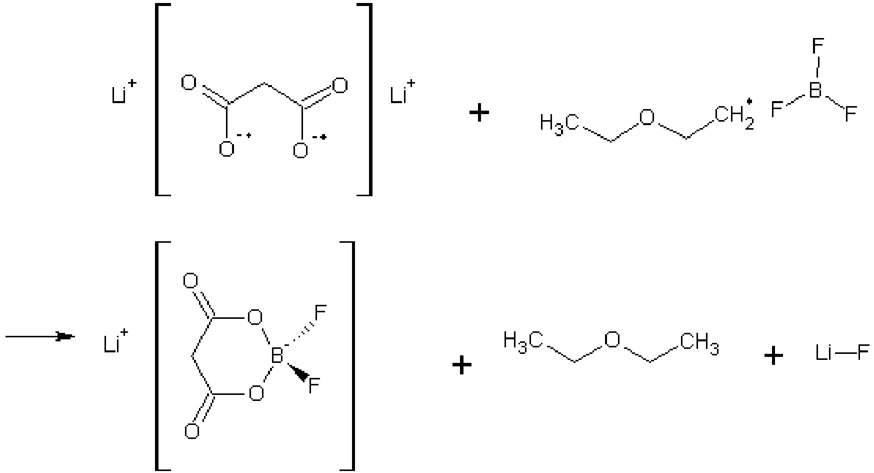

After the reaction ends, unreacted dilithium R-malonate and the lithium fluoride solid generated after the reaction may be filtered out. The ether generated from the reaction has a low boiling point (about 35°C) and is volatized into gas for easy separation.

Preferably, the constant temperature is kept at 75°C inside the sealed reactor for 24h. At the temperature, the reaction occurs easily and volatilization of a reaction resultant can be effectively controlled, thereby making it easy to obtain a high purity reaction resultant.

The method for preparing a non-aqueous organic electrolyte additive provided in the second aspect of the embodiment of the present invention provides a new-type non-aqueous organic electrolyte additive.

In a third aspect, an embodiment of the present invention provides a non-aqueous organic electrolyte, including: a lithium salt, a non-aqueous organic solvent and a non-aqueous organic electrolyte additive, where a chemical structural formula of the non-aqueous organic electrolyte additive is as shown by Formula (I): 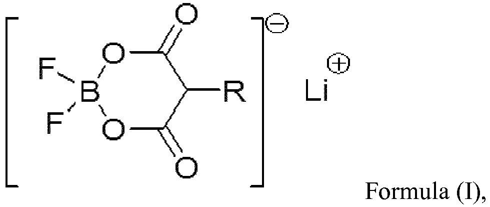 where R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

Preferably, R is H, F, CH₃, CH₂F, CH₂CH₃ or OCH₂CH₃.

The lithium salt serves as a carrier and is used to ensure basic operation of lithium ions in a lithium-ion secondary battery. Preferably, the lithium salt is one or more selected from LiPF₆, LiBF₄, LiClO₄, LiPF₃(CF₂CF₃)₃, LiCF₃SO₃ and LiBOB (lithium bis(oxalato)borate). Preferably, a final concentration of the lithium salt in the non-aqueous organic electrolyte is 0.5 - 1.5mol/L.

The non-aqueous organic solvent is one or more selected from carbonates and halogenated derivatives of the carbonates, esters, ethers and ketones. Preferably, the non-aqueous organic solvent is one or more selected from ethylene carbonate (Ethylene Carbonate, EC for short), propylene carbonate (Propylene Carbonate, PC for short), γ-butyrolactone, dimethyl carbonate (DMC), ethyl methyl carbonate (EMC), methyl formate, ethyl formate and methyl acetate.

Preferably, in mass fraction, the non-aqueous organic solvent accounts for 80 - 99.9% of the non-aqueous organic electrolyte, and the non-aqueous organic electrolyte additive accounts for 0.1 - 20% of the non-aqueous organic electrolyte.

More preferably, in mass fraction, the non-aqueous organic solvent accounts for 90 - 98% of the non-aqueous organic electrolyte, and the non-aqueous organic electrolyte additive accounts for 2 - 10% of the non-aqueous organic electrolyte.

To meet an application demand of the non-aqueous organic electrolyte in a certain scenario, preferably, the non-aqueous organic electrolyte further includes a functional additive, where the functional additive is a high temperature additive, a flame retardant additive or an overcharging additive.

More preferably, the high temperature additive is one or more selected from 1,3-propane sultone, ethylene carbonate (FEC) and lithium tetrafluoroborate (LiBF₄). The flame retardant additive is one or more selected from trimethyl phosphate, triethyl phosphate, triphenyl phosphate, tributyl phosphate and phosphazene compounds. The overcharging additive is one or more selected from biphenyl and cyclohexylbenzene.

More preferably, in mass fraction, the functional additive accounts for 0.1 - 15% of the non-aqueous organic electrolyte.

The non-aqueous organic electrolyte provided in the third aspect of the embodiment of the present invention contains the foregoing non-aqueous organic electrolyte additive, and therefore, can be used in a high-voltage lithium-ion secondary battery of 4.5V and above and has high chemical stability and electrochemical stability, so as to avoid a phenomenon of gas generation and expansion of the lithium-ion secondary battery at a high voltage and increase cyclic performance and discharge capacity of the lithium-ion secondary battery at a high voltage.

In a fourth aspect, an embodiment of the present invention provides a lithium-ion secondary battery, including:
an anode, including an anode active material where lithium ions can be inserted or extracted;
a cathode, including a cathode active material where lithium ions can be inserted or extracted;
a separator; and
a non-aqueous organic electrolyte, including: a lithium salt, a non-aqueous organic solvent and a non-aqueous organic electrolyte additive, where a chemical structural formula of the non-aqueous organic electrolyte additive is as shown by Formula (I): 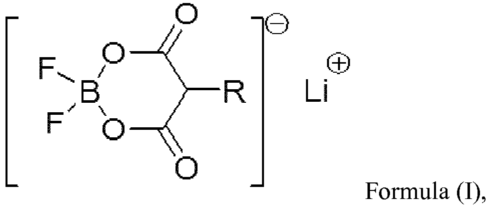 where R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

Preferably, R is H, F, CH₃, CH₂F, CH₂CH₃ or OCH₂CH₃.

The non-aqueous organic electrolyte is as described in the third aspect of the embodiment of the present invention, and is not repeatedly described here.

Preferably, the anode active material has a high lithium extraction and insertion platform during extraction and insertion of lithium ions in charging and discharging at a voltage of 4.5V and above 4.5V. More preferably, the anode active material is one or more selected from LiCoPO₄, LiNiPO₄, Li₃V₂PO₄ and LiNi_{0.5}Mn_{1.5}O₄.

The anode active material may also be a mixture of a spinel structure material LiMnₓNi_{y}O₄ and a layered solid solution material zLi₂MnO₃*(1-z)LiMO₂, and its general formula is:

p(LiMnₓNi_{y}O₄)*q[zLi₂MnO₃*(1-z)LiMO₂]

(0<p<1, 0<q<1, p+ q=1; 0<x<2, 0<y<1, x+y=2; 0<z<1, M may be selected from Co and Ni). LiMnₓNi_{y}O₄ has a spinel structure and manifests a very high lithium extraction and insertion platform during extraction and insertion of lithium ions in charging and discharging. zLi₂MnO₃*(1-z)LiMO₂ is a manganese multi-component mixed material and has a good stability characteristic. When charged to a potential 4.5V and a higher potential relative to metal lithium, the material structure has stable performance, and has a good high temperature storage characteristic and safety when being used at a fully-charged high voltage after equipped with the non-aqueous organic electrolyte.

A form of the lithium-ion secondary battery provided in the fourth aspect of the embodiment of the present invention is not limited, and may be a rectangular, cylindrical or soft pack battery. In either a wound form or a stacked form, the lithium-ion secondary battery has a high energy density and good cyclic performance and discharge capacity.

A method for preparing the lithium-ion secondary battery is: making an anode, a cathode and a separator into a battery pole core, and filling the non-aqueous organic electrolyte to obtain a lithium-ion secondary battery. The method for preparing the lithium-ion secondary battery is simple and feasible.

Advantages of the embodiments of the present invention are described in the following parts of the specification, a part of which are obvious according to the specification, or may be learned through implementation of the embodiments of the present invention.

### DESCRIPTION OF EMBODIMENTS

Exemplary implementation manners of the embodiments of the present invention are described in the following. It should be noted that persons of ordinary skill in the art may further make several modifications and variations without departing from the principle of the embodiments of the present invention, and these modifications and variations should also be construed as falling within the protection scope of the embodiments of the present invention.

Raw materials such as dilithium malonate and derivatives of dilithium malonate in the embodiments of the present invention are purchased from Suzhou Yacoo Chemical Reagent Corporation.

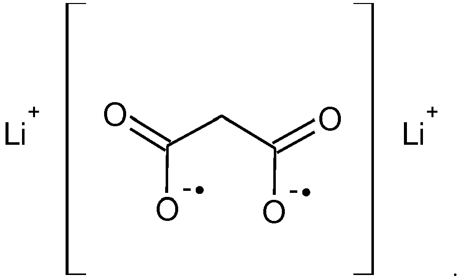

### Embodiment 1

A method for preparing a non-aqueous organic electrolyte additive includes the following steps:
mixing a substance A₁ dilithium malonate and a boron trifluoride ether complex BF₃O(CH₂CH₃)₂ by a mole ratio of 1:1, keeping a constant temperature at 70°C inside a sealed reactor for 24h, waiting till a reaction ends, cooling to a room temperature, filtering out an unreacted substance A₁ dilithium malonate and a lithium fluoride solid generated after the reaction, concentrating filtrate at reduced pressure, cooling for crystallization, and using dimethyl carbonate for recrystallization, so as to obtain a non-aqueous organic electrolyte additive having a chemical structural formula as shown by Formula (Ia),

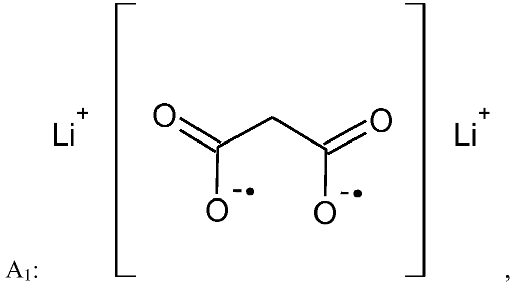

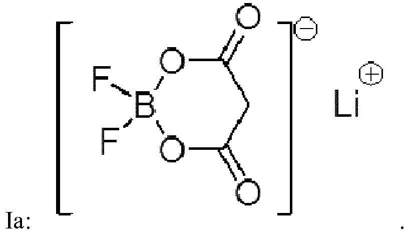

For the non-aqueous organic electrolyte additive Ia obtained in the embodiment of the present invention, a theoretical value and an experimental value of element analysis are 99.95% and 99.72%. It can be known from a result of the element analysis that, theoretical values and experimental values for the element carbon, the element oxygen, the element fluorine and the element lithium are basically consistent, and element contents are 23.97% (23.84%), 42.63% (42.43%), 22.65% (22.49%), 4.00% (3.99%), respectively.

A method for preparing a non-aqueous organic electrolyte includes the following steps:
(1) dissolving 1M lithium salt LiPF₆ in a non-aqueous organic solvent, where the non-aqueous organic solvent is a mixed solvent of ethylene carbonate (EC), ethyl methyl carbonate (EMC) and dimethyl carbonate (DMC) by a mass ratio of 1:1:1, then adding the non-aqueous organic electrolyte additive Ia obtained in this embodiment, and adding functional additives 1,3-propane sultone and tributyl phosphate, where in mass fraction, the non-aqueous organic electrolyte additive Ia, the functional additives 1,3-propane sultone and tributyl phosphate account for 3%, 2% and 3% of the non-aqueous organic electrolyte, respectively, so as to obtain a non-aqueous organic electrolyte A.

The following takes fabrication of a rectangular wound-form lithium-ion secondary soft pack battery (a model is 423450-800mAh) as example to describe a method for preparing a lithium-ion secondary battery in the embodiment of the present invention.

### Preparation of an anode piece

An anode active material chosen in the embodiment of the present invention is a mixed material of LiMn_{1.5}Ni_{0.5}O₄ and 0.5Li₂MnO₃*0.5LiNiO₂ by a mass ratio of 9:1, and before the mixing, a solid-phase ball milling method is adopted to make the mixture evenly dispersed. The dispersed anode active material, a conductive agent carbon black powder material and a binder PVDF powder material are then mixed according to a mass ratio of 85:10:5, an N-methyl-2-pyrrolidone (NMP) solution is then added to prepare oil-based slurry, and finally, the slurry is coated on two sides of an aluminum current collector to fabricate an anode piece of a lithium-ion secondary battery.

### Preparation of a cathode piece

A cathode active material artificial graphite powder, a binder carboxymethyl cellulose (CMC), and a binder styrene-butadiene rubber (SBR) emulsion are mixed according to a mass ratio of 100:3:2, deionized water is then added to prepare water-based cathode slurry, and finally, the slurry is coated at two sides of a copper current collector to fabricate a cathode piece of the lithium-ion secondary battery, and capacity of the cathode piece is designed to be 1.2 times as that of the anode piece.

The non-aqueous organic electrolyte adopts the non-aqueous organic electrolyte A obtained in the embodiment of the present invention.

### Fabrication of a lithium-ion secondary battery

A composite separator formed of polypropylene and polyethylene is placed between the prepared anode piece and cathode piece, like a sandwich structure, which are then together wound into a 423450 rectangular battery pole core. Finally, a rectangular wound soft pack battery is completed, and the non-aqueous organic electrolyte A is filled to obtain a lithium-ion secondary battery A.

No matter whether a lithium-ion secondary battery is a rectangular or cylindrical or soft pack battery, and no matter whether a lithium-ion secondary battery is a wound form or a stacked form, a same effect can be achieved by adopting the foregoing method for preparing a lithium-ion secondary battery.

### Embodiment 2

A method for preparing a non-aqueous organic electrolyte additive includes the following steps:
mixing a substance A₂ (fluoro dilithium malonate) and a boron trifluoride ether complex BF₃O(CH₂CH₃)₂ by a mole ratio of 1:1, keeping a constant temperature at 50°C inside a sealed reactor for 24h, waiting till a reaction ends, cooling to a room temperature, filtering out an unreacted substance A₂ (fluoro dilithium malonate) and a lithium fluoride solid generated after the reaction, concentrating filtrate at reduced pressure, cooling for crystallization, and using dimethyl carbonate for recrystallization, so as to obtain a non-aqueous organic electrolyte additive having a chemical structural formula as shown by Formula (Ib),

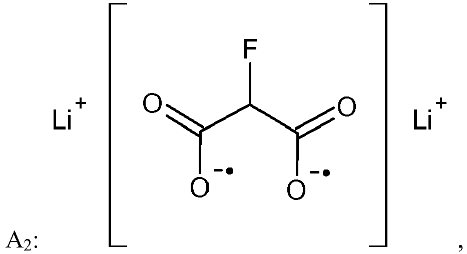

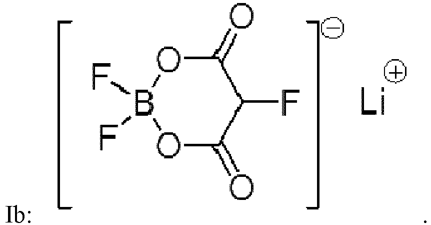

For the non-aqueous organic electrolyte additive Ib obtained in the embodiment of the present invention, a theoretical value and an experimental value of element analysis are 99.95% and 99.65%. It can be known from a result of the element analysis that, theoretical values and experimental values of the element carbon, the element oxygen, the element fluorine and the element lithium are basically consistent, and element contents are 23.97% (23.74%), 42.63% (42.53%), 22.65% (22.49%), 4.00% (4.00%), respectively.

A method for preparing a non-aqueous organic electrolyte includes the following steps:
(1) dissolving 1M lithium salt LiBF₄ in a non-aqueous organic solvent, where the non-aqueous organic solvent is a mixed solvent of ethylene carbonate (EC), ethyl methyl carbonate (EMC) and dimethyl carbonate (DMC) by a mass ratio of 1:1:1, then adding the non-aqueous organic electrolyte additive Ib obtained in the embodiment, and adding functional additives 1,3-propane sultone and tributyl phosphate, where in mass fraction, the non-aqueous organic electrolyte additive Ib, the functional additives 1,3-propane sultone and tributyl phosphate account for 5%, 2% and 3% of the non-aqueous organic electrolyte, respectively, so as to obtain a non-aqueous organic electrolyte B.

### Preparation of an anode piece

An anode active material LiMn₂O₄, a conductive agent carbon black powder material and a binder PVDF powder material are mixed according to a mass ratio of 85:10:5 again, an N-methyl-2-pyrrolidone (NMP) solution is then added to prepare oil-based slurry, and finally, the slurry is coated at two sides of an aluminum current collector to fabricate an anode piece of a lithium-ion secondary battery.

The rest are the same as those in the method for fabricating a lithium-ion secondary battery in Embodiment 1, so as to obtain a lithium-ion secondary battery B.

### Embodiment 3

A method for preparing a non-aqueous organic electrolyte additive includes the following steps:
mixing a substance A₃ ethoxy dilithium malonate and a boron trifluoride ether complex BF₃O(CH₂CH₃)₂ by a mole ratio of 1:1, keeping a constant temperature at 150°C inside a sealed reactor for 20h, waiting till a reaction ends, cooling to a room temperature, filtering out an unreacted substance A₃ ethoxy dilithium malonate and a lithium fluoride solid generated after the reaction, concentrating filtrate at reduced pressure, cooling for crystallization, and using dimethyl carbonate for recrystallization, so as to obtain a non-aqueous organic electrolyte additive having a chemical structural formula as shown by Formula (Ic),

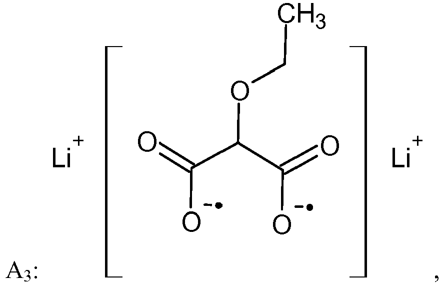

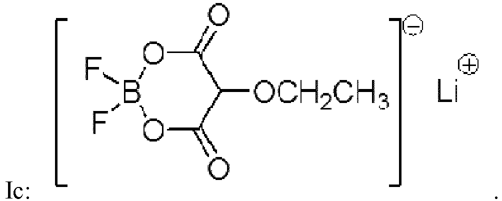

For the non-aqueous organic electrolyte additive Ic obtained in the embodiment of the present invention, a theoretical value and an experimental value for element analysis are 99.95% and 99.32%. It can be known from a result of the element analysis that, theoretical values and experimental values of the element carbon, the element oxygen, the element fluorine and the element lithium are basically consistent, and element contents are 23.97% (23.94%), 42.63% (42.40%), 22.65% (22.44%), 4.00% (3.89%), respectively.

A method for preparing a non-aqueous organic electrolyte includes the following steps:
(1) dissolving 1.2M lithium salt LiPF₆ in a non-aqueous organic solvent, where the non-aqueous organic solvent is a mixed solvent of ethylene carbonate (EC), ethyl methyl carbonate (EMC) and dimethyl carbonate (DMC) by a mass ratio of 1:1:1, then adding the non-aqueous organic electrolyte additive Ic obtained in the embodiment, and adding functional additives 1,3-propane sultone and tributyl phosphate, where in mass fraction, the non-aqueous organic electrolyte additive Ic, the functional additives 1,3-propane sultone and tributyl phosphate account for 10%, 2% and 3% of the non-aqueous organic electrolyte, respectively, so as to obtain a non-aqueous organic electrolyte C.

### Preparation of an anode piece

An anode active material LiCoPO₄, a conductive agent carbon black powder material and a binder PVDF powder material are mixed according to a mass ratio of 85:10:5 again, an N-methyl-2-pyrrolidone (NMP) solution is then added to prepare oil-based slurry, and finally, the slurry is coated at two sides of an aluminum current collector to fabricate an anode piece of a lithium-ion secondary battery.

The rest are the same as those in the method for fabricating a lithium-ion secondary battery in Embodiment 1, so as to obtain a lithium-ion secondary battery C.

### Embodiment 4

A method for preparing a non-aqueous organic electrolyte additive includes the following steps:
mixing a substance A₄ (fluoro methyl dilithium malonate) and a boron trifluoride ether complex BF₃O(CH₂CH₃)₂ by a mole ratio of 1:1, keeping a constant temperature at 100°C inside a sealed reactor for 24h, waiting till a reaction ends, cooling to a room temperature, filtering out an unreacted substance A₄ (fluoro methyl dilithium malonate) and a lithium fluoride solid generated after the reaction, concentrating filtrate at reduced pressure, cooling for crystallization, and using dimethyl carbonate for recrystallization, so as to obtain a non-aqueous organic electrolyte additive having a chemical structural formula as shown by Formula (Id),

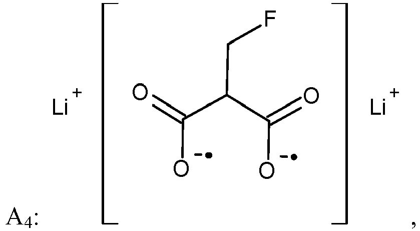

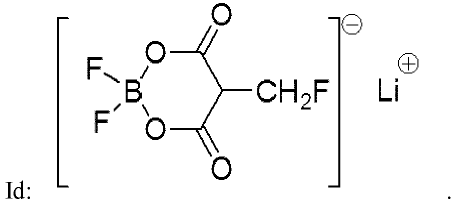

For the non-aqueous organic electrolyte additive Id obtained in the embodiment of the present invention, a theoretical value and an experimental value of element analysis are 99.95% and 99.65%. It can be known from a result of the element analysis that, theoretical values and experimental values of the element carbon, the element oxygen, the element fluorine and the element lithium are basically consistent, and element contents are 23.97% (23.87%), 42.63% (42.48%), 22.65% (22.52%), 4.00% (4.01%), respectively.

A method for preparing a non-aqueous organic electrolyte includes the following steps:
(1) dissolving 1.5M lithium salt LiClO₄ in a non-aqueous organic solvent, where the non-aqueous organic solvent is a mixed solvent of methyl formate, ethyl formate and methyl acetate by a mass ratio of 1:1:1, then adding the non-aqueous organic electrolyte additive Id obtained in the embodiment, and adding functional additives ethylene carbonate (FEC) and triphenyl phosphate, where in mass fraction, the non-aqueous organic electrolyte additive Id, the functional additives ethylene carbonate (FEC) and triphenyl phosphate account for 0.1%, 0.05% and 0.05% of the non-aqueous organic electrolyte, respectively, so as to obtain a non-aqueous organic electrolyte D.

### Preparation of an anode piece

An anode active material LiNiPO₄, a conductive agent carbon black powder material and a binder PVDF powder material are mixed according to a mass ratio of 85:10:5 again. An N-methyl-2-pyrrolidone (NMP) solution is then added to prepare oil-based slurry, and finally, the slurry is coated at two sides of an aluminum current collector to fabricate an anode piece of a lithium-ion secondary battery.

The rest are the same as those in the method for fabricating a lithium-ion secondary battery in Embodiment 1, so as to obtain a lithium-ion secondary battery D.

### Embodiment 5

A method for preparing a non-aqueous organic electrolyte additive includes the following steps:
mixing a substance A₅ methyl dilithium malonate and a boron trifluoride ether complex BF₃O(CH₂CH₃)₂ by a mole ratio of 1:1, keeping a constant temperature at 120°C inside a sealed reactor for 20h, waiting till a reaction ends, cooling to a room temperature, filtering out an unreacted substance A₅ methyl dilithium malonate and a lithium fluoride solid generated after the reaction, concentrating filtrate at reduced pressure, cooling for crystallization, and using dimethyl carbonate for recrystallization, so as to obtain a non-aqueous organic electrolyte additive having a chemical structural formula as shown by Formula (Ie),

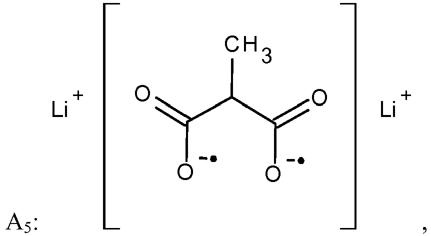

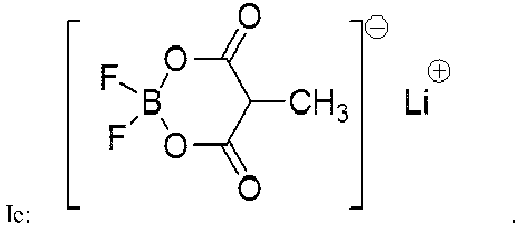

For the non-aqueous organic electrolyte additive Ie obtained in the embodiment of the present invention, a theoretical value and an experimental value of element analysis are 99.95% and 99.68%. It can be known from a result of the element analysis that, theoretical values and experimental values of the element carbon, the element oxygen, the element fluorine and the element lithium are basically consistent, and element contents are 23.97% (23.81%), 42.63% (42.59%), 22.65% (22.59%), 4.00% (3.99%), respectively.

A method for preparing a non-aqueous organic electrolyte includes the following steps:
(1) dissolving 0.5M lithium salt LiPF₃(CF₂CF₃)₃ in a non-aqueous organic solvent, where the non-aqueous organic solvent is propylene carbonate (PC), then adding the non-aqueous organic electrolyte additive Ie obtained in the embodiment, and adding functional additives lithium tetrafluoroborate (LiBF₄), trimethyl phosphate and biphenyl, where in mass fraction, the non-aqueous organic electrolyte additive Ie, the functional additives lithium tetrafluoroborate (LiBF₄), trimethyl phosphate and biphenyl account for 20%, 2%, 2% and 3% of the non-aqueous organic electrolyte, respectively, so as to obtain a non-aqueous organic electrolyte E.

### Preparation of an anode piece

An anode active material Li₃V₂PO₄, a conductive agent carbon black powder material and a binder PVDF powder material are mixed according to a mass ratio of 85:10:5 again. An N-methyl-2-pyrrolidone (NMP) solution is then added to prepare oil-based slurry, and finally, the slurry is coated at two sides of an aluminum current collector to fabricate an anode piece of a lithium-ion secondary battery.

The rest are the same as those in the method for fabricating a lithium-ion secondary battery in Embodiment 1, so as to obtain a lithium-ion secondary battery E.

### Embodiment 6

A method for preparing a non-aqueous organic electrolyte additive includes the following steps:
mixing a substance A₆ ethyl dilithium malonate and a boron trifluoride ether complex BF₃O(CH₂CH₃)₂ by a mole ratio of 1:1, keeping a constant temperature at 60°C inside a sealed reactor for 24h, waiting till a reaction ends, cooling to a room temperature, filtering out an unreacted substance A₆ ethyl dilithium malonate and a lithium fluoride solid generated after the reaction, concentrating filtrate at reduced pressure, cooling for crystallization, and using dimethyl carbonate for recrystallization, so as to obtain a non-aqueous organic electrolyte additive If, 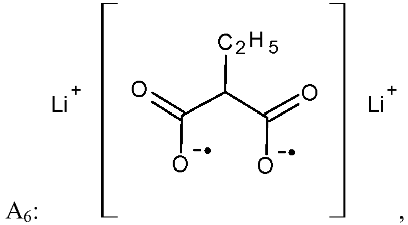
If:

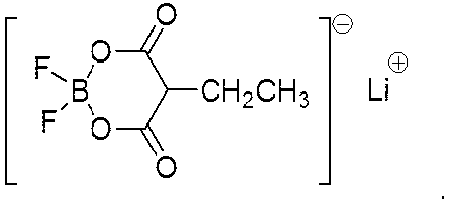

For the non-aqueous organic electrolyte additive If obtained in the embodiment of the present invention, a theoretical value and an experimental value of element analysis are 99.95% and 99.66%. It can be known from a result of the element analysis that, theoretical values and experimental values of the element carbon, the element oxygen, the element fluorine and the element lithium are basically consistent, and element contents are 23.97% (23.88%), 42.63% (42.58%), 22.65% (22.41%), 4.00% (3.99%), respectively.

A method for preparing a non-aqueous organic electrolyte includes the following steps:
(1) dissolving 1M lithium salt LiBOB in a non-aqueous organic solvent, where the non-aqueous organic solvent is γ-butyrolactone, then adding the non-aqueous organic electrolyte additive If obtained in the embodiment, and adding functional additives 1,3-propane sultone, trimethyl phosphate and cyclohexylbenzene, where in mass fraction, the non-aqueous organic electrolyte additive If, the functional additives 1,3-propane sultone, trimethyl phosphate and cyclohexylbenzene account for 2%, 5%, 5% and 5% of the non-aqueous organic electrolyte, respectively, so as to obtain a non-aqueous organic electrolyte F.

### Preparation of an anode piece

An anode active material LiMn₂O₄, a conductive agent carbon black powder material and a binder PVDF powder material are mixed according to a mass ratio of 85:10:5 again. An N-methyl-2-pyrrolidone (NMP) solution is then added to prepare oil-based slurry, and finally, the slurry is coated at two sides of an aluminum current collector to fabricate an anode piece of a lithium-ion secondary battery.

The rest are the same as those in the method for fabricating a lithium-ion secondary battery in Embodiment 1, so as to obtain a lithium-ion secondary battery F.

### Comparison Example 1

1M lithium salt LiPF₆ is dissolved in a non-aqueous organic solvent, where the non-aqueous organic solvent is a mixed solvent of ethylene carbonate (EC), ethyl methyl carbonate (EMC) and dimethyl carbonate (DMC) by a mass ratio of 1:1:1, then functional additives 1,3-propane sultone and tributyl phosphate are added, where in mass fraction, the functional additives 1,3-propane sultone and tributyl phosphate account for 2% and 3% of the non-aqueous organic electrolyte, respectively, so as to obtain a non-aqueous organic electrolyte. The prepared non-aqueous organic electrolyte is filled in the fabricated rectangular wound-form lithium-ion secondary soft pack battery (the model is 423450, 800mAh), which is labeled as Comparison Example 1.

### Comparison Example 2

1M lithium salt LiPF₆ is dissolved in a non-aqueous organic solvent, where the non-aqueous organic solvent is a mixed solvent of ethylene carbonate (EC), ethyl methyl carbonate (EMC) and dimethyl carbonate (DMC) by a mass ratio of 1:1:1, then functional additives 1,3-propane sultone, tributyl phosphate, high voltage additive lithium oxalyldifluoroborate (LiODFB) (already commercialized) are then added, where in mass fraction, the functional additives 1,3-propane sultone, tributyl phosphate and high voltage additive lithium oxalyldifluoroborate (LiODFB) account for 2%, 3% and 3.5% of the non-aqueous organic electrolyte, respectively, so as to obtain a non-aqueous organic electrolyte. The prepared non-aqueous organic electrolyte is filled in the fabricated rectangular wound-form lithium-ion secondary soft pack battery (the model is 423450, 800mAh), which is labeled as Comparison Example 2.

The lithium-ion secondary batteries obtained in the embodiments and Comparison Examples are experimental batteries. After procedures such as aging, a cyclic performance test is performed with a 0.5C current in a voltage range of 3.0 - 4.9V, and a test result is shown in Table 1.

**Table 1 300-round cyclic performance, internal resistance change rate and size change rate at 4.9V of lithium-ion secondary battery**

| **Battery Sequence Number** | **Cyclic 300-round Performance** | **Internal Resistance Change Rate** | **Size Change Rate** |
|---|---|---|---|
| Lithium-ion secondary battery A Test 1 | 79.8% | 35.2% | 13.2% |
| Lithium-ion secondary battery A Test 2 | 78.9% | 34.8% | 11.9% |
| Lithium-ion secondary battery B Test 1 | 80.3% | 29.9% | 11.7% |
| Lithium-ion secondary battery B Test 2 | 81.0% | 28.9% | 12.8% |
| Lithium-ion secondary battery C Test 1 | 83.8% | 28.5% | 11.9% |
| Lithium-ion secondary battery C Test 2 | 82.7% | 29.1% | 10.5% |
| Lithium-ion secondary battery D Test 1 | 89.5% | 19.8% | 3.5% |
| Lithium-ion secondary battery D Test 2 | 90.1% | 18.9% | 4.1% |
| Lithium-ion secondary battery E Test 1 | 88.5% | 19.7% | 3.9% |
| Lithium-ion secondary battery E Test 2 | 87.9% | 17.9% | 3.2% |
| Lithium-ion secondary battery F Test 1 | 83.3% | 28.2% | 10.5% |
| Lithium-ion secondary battery F Test 2 | 82.9% | 29.1% | 11.2% |
| Comparison Example 1 Test 1 | 65.7% | 58.9% | 25.3% |
| Comparison Example 1 Test 2 | 63.2% | 60.5% | 27.9% |
| Comparison Example 2 Test 1 | 72.2% | 48.5% | 18.8% |
| Comparison Example 2 Test 2 | 69.8% | 49.8% | 19.6% |

The test result shows that, performance of the lithium-ion secondary battery in which the non-aqueous organic electrolyte additive provided in the first aspect of the embodiment of the present invention is added is obviously improved. After 300-round cycles, a retention ratio may reach 80% and above. In comparison, for a lithium-ion secondary battery in which the non-aqueous organic electrolyte additive is not added, after 300-round cycles, a capacity retention ratio only has about 65% left. It indicates that the non-aqueous organic electrolyte additive provided in the first aspect of the embodiment of the present invention improves cyclic performance of a lithium-ion secondary battery at a high voltage, and a reason is that, the non-aqueous organic electrolyte additive is oxidized and decomposed before an organic solvent, and its six-membered ring is opened, so that a protection film is formed on a surface of the anode active material, which covers active sites on the surface of the anode active material, blocks direct contact between the active sites on the surface of the anode active material and a non-aqueous organic electrolyte, and reduces an oxidation effect of the anode active material on the non-aqueous organic electrolyte, thereby increasing cyclic performance of the lithium-ion secondary battery at a high voltage and avoiding situations that a volume of the lithium-ion secondary battery increases and discharge capacity is reduced. In addition, thickness of the protection film formed by the non-aqueous organic electrolyte additive provided in the first aspect of the present invention is between 20nm and 30nm, and under a precondition of not affecting internal resistance of the lithium-ion secondary battery, conduction of Li⁺ is also facilitated, and the non-aqueous organic electrolyte additive has high stability in an environment of a high-voltage lithium-ion secondary battery.

## Claims

1. A non-aqueous organic electrolyte additive, wherein a chemical structural formula of the non-aqueous organic electrolyte additive is as shown by Formula (I): 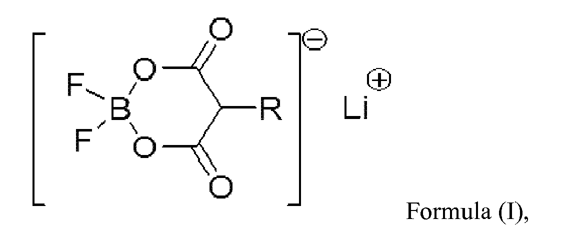 wherein R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

2. The non-aqueous organic electrolyte additive according to claim 1, wherein R is H, F, CH₃, CH₂F, CH₂CH₃ or OCH₂CH₃.

3. A method for preparing a non-aqueous organic electrolyte additive, comprising the following steps:
mixing dilithium R-malonate having a chemical structural formula as shown by (II) and a boron trifluoride ether complex BF₃O(CH₂CH₃)₂ by a mole ratio of 1:1, keeping a constant temperature at 50 - 150°C inside a sealed reactor for 20 - 24h, waiting till a reaction ends, cooling to a room temperature, filtering out unreacted dilithium R-malonate and a lithium fluoride solid generated after the reaction, concentrating filtrate at reduced pressure, cooling for crystallization, and using dimethyl carbonate for recrystallization, so as to obtain a non-aqueous organic electrolyte additive having a chemical structural formula as shown by Formula (I), 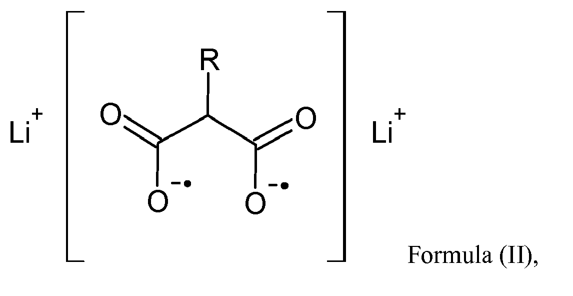 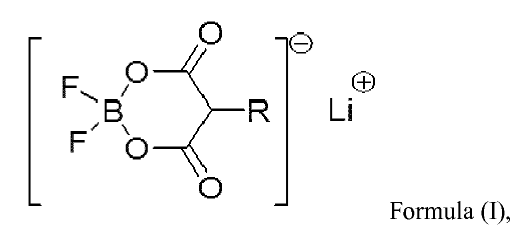 wherein in Formula (I) and Formula (II), R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

4. The method for preparing a non-aqueous organic electrolyte additive according to claim 3, wherein R is H, F, CH₃, CH₂F, CH₂CH₃ or OCH₂CH₃.

5. The method for preparing a non-aqueous organic electrolyte additive according to claim 3, wherein the constant temperature is kept at 75°C inside the sealed reactor for 24h.

6. A non-aqueous organic electrolyte, comprising: a lithium salt, a non-aqueous organic solvent and a non-aqueous organic electrolyte additive, wherein a chemical structural formula of the non-aqueous organic electrolyte additive is as shown by Formula (I): 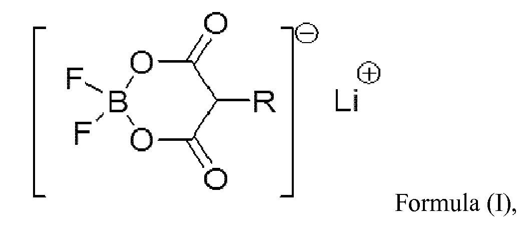 wherein R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

7. The non-aqueous organic electrolyte according to claim 6, wherein R is H, F, CH₃, CH₂F, CH₂CH₃ or OCH₂CH₃.

8. The non-aqueous organic electrolyte according to claim 6, wherein in mass fraction, the non-aqueous organic solvent accounts for 80 - 99.9% of the non-aqueous organic electrolyte, and the non-aqueous organic electrolyte additive accounts for 0.1 - 20% of the non-aqueous organic electrolyte.

9. A lithium-ion secondary battery, comprising:
an anode, comprising an anode active material where lithium ions can be inserted or extracted;
a cathode, comprising a cathode active material where lithium ions can be inserted or extracted;
a separator; and
a non-aqueous organic electrolyte, wherein the non-aqueous organic electrolyte comprises: a lithium salt, a non-aqueous organic solvent and a non-aqueous organic electrolyte additive, and a chemical structural formula of the non-aqueous organic electrolyte additive is as shown by Formula (I): 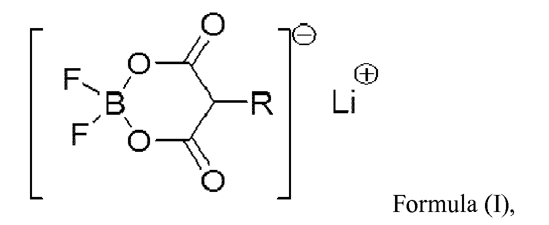 wherein R is H, halogen or R is one of: a C₁-C₁₀ alkyl group, a C₁-C₁₀ alkene group, a C₁-C₁₀ alkyne group, a C₁-C₁₀ alkoxy group, a halogen-containing C₁-C₁₀ alkyl group, a halogen-containing C₁-C₁₀ alkene group, a halogen-containing C₁-C₁₀ alkyne group and a halogen-containing C₁-C₁₀ alkoxy group.

10. The lithium-ion secondary battery according to claim 9, wherein the anode active material is one or more selected from LiCoPO₄, LiNiPO₄, Li₃V₂PO₄ and LiNi_{0.5}Mn_{1.5}O₄, or the anode active material is a mixture of a spinel structure material LiMnₓNi_{y}O₄ and a layered solid solution material zLi₂MnO₃*(1-z)LiMO₂, and its general formula is:
p(LiMnₓNi_{y}O₄)*q[zLi₂MnO₃*(1-z)LiMO₂]
(0<p<1 0<q<1, p+q=l; 0<x<2, 0<y<1 x+y=2; 0<z<1, M is Co or Ni).
